# EUROPEAN PATENT SPECIFICATION

(11) **EP 1 662 921 B1**
(45) Date of publication and mention of the grant of the patent: **30.03.2011**
(21) Application number: 04783679.6
(22) Date of filing: 09.09.2004
(51) Int. Cl.: A41G 5/00

(54) **HAIR EXTENSION ATTACHMENT DEVICE**
VORRICHTUNG ZUM ANBRINGEN VON HAARVERLÄNGERUNGEN
SYSTEME DE FIXATION D'EXTENSIONS CAPILLAIRES A LA CHEVELURE HUMAINE

(30) Priority: 09.09.2003 US 501525 P
(43) Date of publication of application: 07.06.2006
(73) Proprietor: CONAIR CORPORATION, Stamford, CT 06902 (US)
(72) Inventor: CARLUCCI, Vito, James, Stratford, CT 06497 (US); TAYLOR, Harold, Roy, Stratford, CT 06614 (US)
(74) Representative: Müller-Boré & Partner Patentanwälte
(86) International application number: PCT/US2004/029538
(87) International publication number: WO 2005/023045

(56) References cited:
- EP-A- 1 424 017
- JP-A- 4 308 205
- US-A- 4 982 748
- US-A- 5 783 800
- US-A- 5 894 846
- US-A- 6 135 124
- US-B1- 6 510 856
- US-B2- 6 820 625

## Description

### BACKGROUND OF THE INVENTION

### Field of the Invention

The present invention relates to a system for attaching natural or artificial hair tresses to extend the apparent length of natural hair using a molded plastic clamping connector and an electrically heated staking tool.

### Description of Related Art

It is known in the art to add additional length to hair by attaching additional extensions to the natural hair. These extensions have been tied, glued, melted together and sewn to the natural tresses. They have also been attached to the hair with various mechanical spring loaded and decorative clamping mechanisms, gluing the tresses to a comb, or by tying a knot at each end and capturing the knots inside shrink tubing. The systems that use glue or melt the hair together can damage the hair, the sewing and tying is difficult and time consuming and therefore expensive. The prior art mechanical clamps are large and very visible, essentially decorative hairclips, with an additional fall of hair attached. The comb-mounted hairpieces do not attach reliably to the natural hair.

From EP 1 424 017 A2 a hair strand applicator is known. The extension modules are designed as a strand of hair attached with one end to a u-shaped thermoplastic element. The module is inserted into a transversally positioned groove at the joining device meeting a strand of the hair of the customer at the u-shaped element. A second component of the device with a projection matching the shape of the groove is pressed against the first part and heated in order to create the intended connection. In an improved version the device is fitted with a magazine containing a supply of extension modules successively moved into the groove.

A further hair strand applicator comprising a connector and a tod with an upper and a lower jaw connected by a hinge is known from US6510856B1. In US6510856B1 the connector does not comprise sections connected by a hinge.

### OBJECT AND SUMMARY OF THE INVENTION

The present invention improves and refines clamping mechanisms for attaching extension tresses of natural or artificial hair with novel, one-piece, molded plastic connectors that can be snapped in place and then set with hot-staking tools. The heat staked connectors reliably and inexpensively attach the tresses and the miniature connectors can be covered and hidden easily in the fall of hair.

### BRIEF DESCRIPTION OF THE DRAWINGS

The present invention is more fully understood by reference to the following detailed description of an illustrative embodiment with the drawings identified below.
Fig. 1 is an illustration of the preferred embodiment of the plastic connector.
Fig. 2 is an illustration of the preferred embodiment of the plastic connector with the tress extension shown in place.
Fig. 3 is an illustration of orthographic and sectional views of the preferred embodiment of the plastic connector.
Fig. 4 is an illustration of orthographic and sectional views of an alternative embodiment of a plastic connector.
Fig 5 is an illustration of the preferred embodiment of the plastic connector and of the heat-staking tool used to attach the connector.
Fig. 6 is a detailed cross-sectional view illustrating the heat-staking tool in the preferred embodiment.
Fig.7 is a plan view of the preferred embodiment of the heat-staking tool illustrating the loading of the connector.
Fig 8 is a cross sectional view of details of the preferred embodiment of the heat-staking tools.
Fig 9 is an illustration of an alternative embodiment of a plastic connector and of the heat-staking tool used to attach the alternative connector.
Fig. 10 is a detailed cross-sectional view illustrating the heat-staking tool in an alternative embodiment.
Fig.11 is a plan view of an alternative embodiment of the heat-staking tool illustrating the loading of an alternative connector.

### DETAILED DESCRIPTION OF THE INVENTION

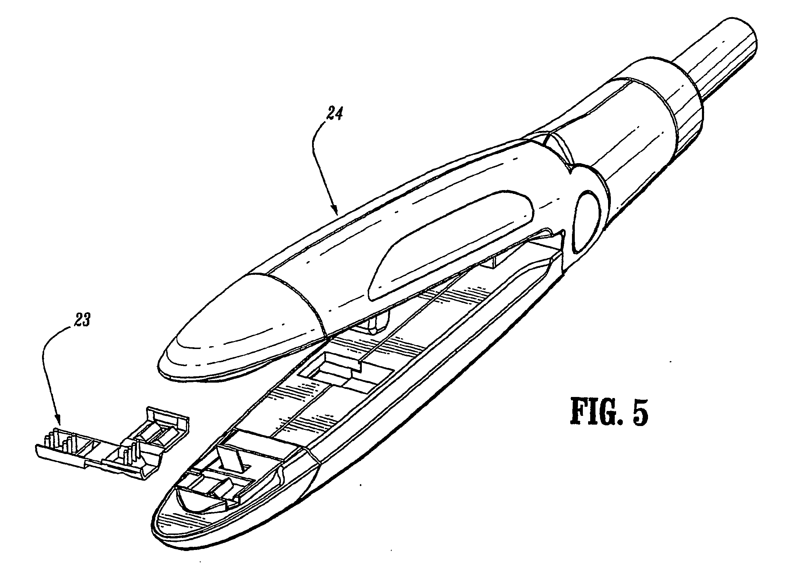

Referring to Fig. 5 of the present invention, is an improved hair extending system, employing a molded plastic connector which is illustrated in the preferred embodiment generally represented by numeral (23) and a heat-staking tool generally represented by numeral (24).

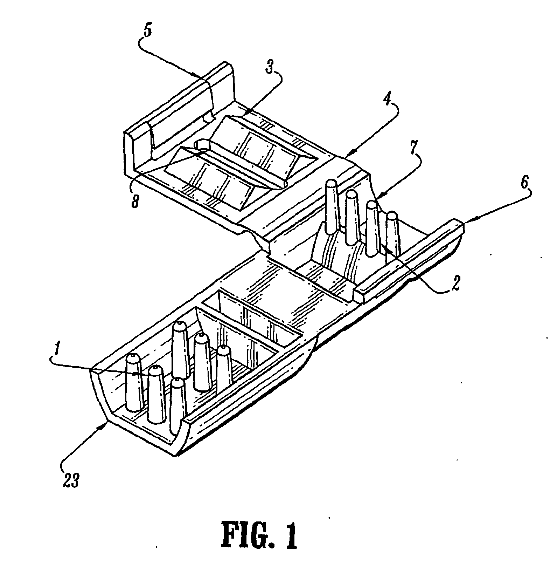

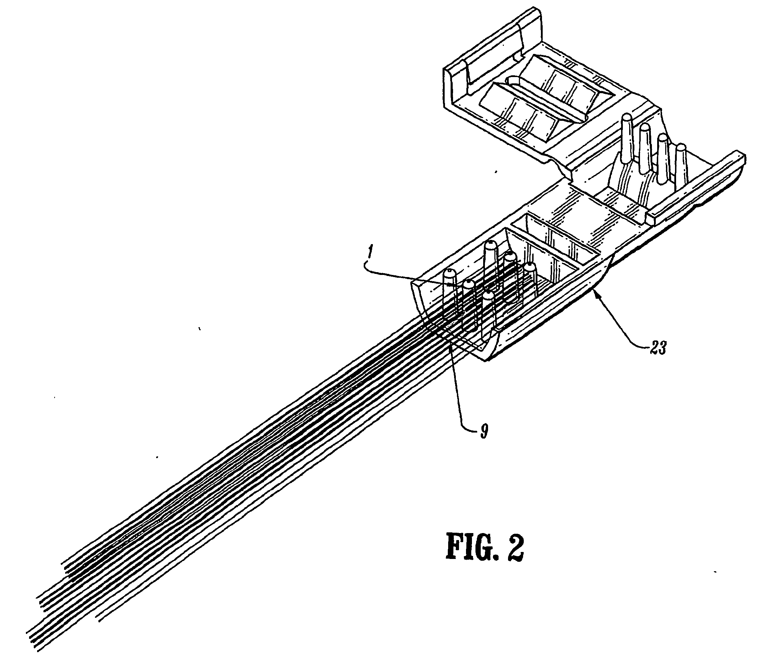

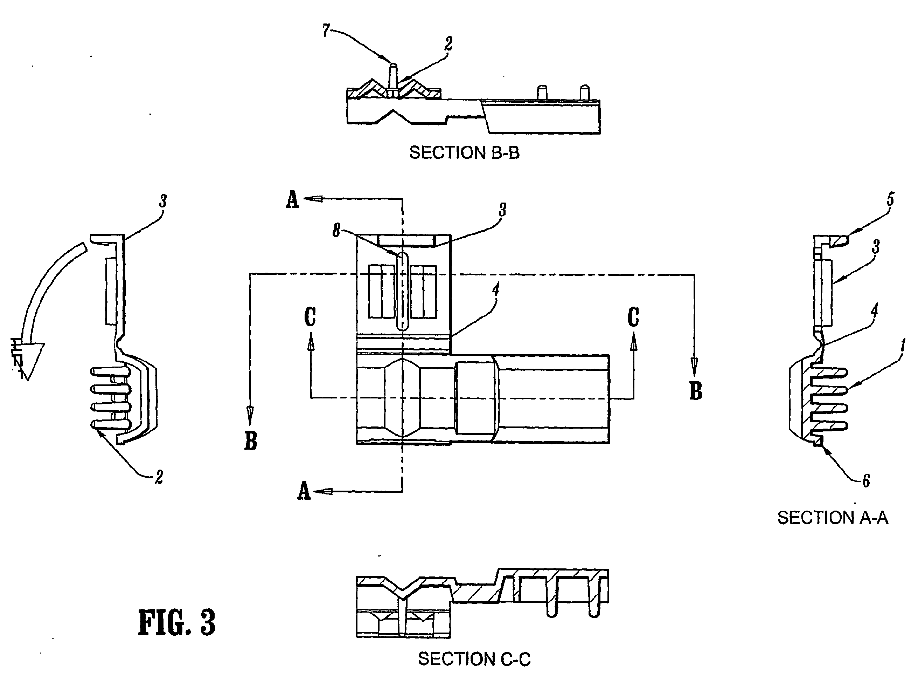

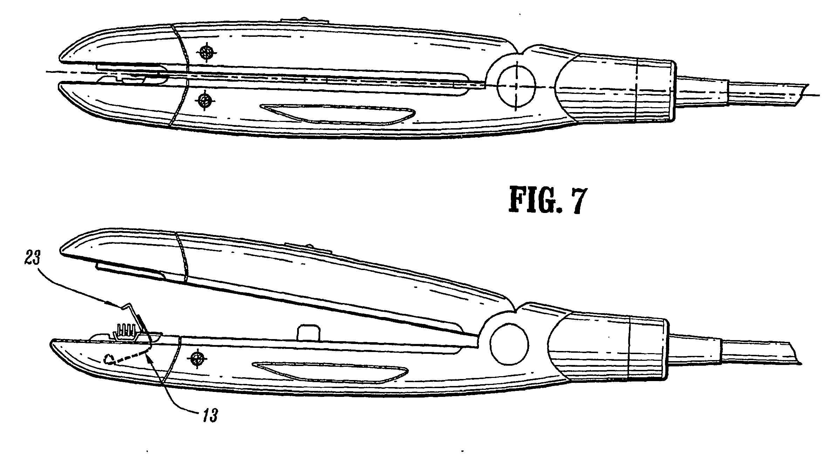

Fig 1 illustrates the preferred embodiment of a small plastic connector (23). The open combs (1) are designed to receive a tress of natural or artificial hair and, using a heat staking or ultrasonic process, in the factory, melt and upset the comb tips permanently over one end of the prepared hair tress. Fig. 2 illustrates the clip with the attached hair tress (9). The connector with the tress extension attached is then clipped onto the end of a gathering of the natural hair. The hair to be extended is gathered and inserted into the row of combs (2). The wing of the clip (3) that is attached to the body of the connector with a molded hinge (4) is bent over and snapped together with the male (6) and female (5) halves of a molded snap lock. The snapped together connector holds the extension to the natural tress, but in order to withstand a hard pull and remain reliably attached, it is necessary to insert the connector into the jaws of the heated staking tool (Fig. 5 & Fig. 7) and to melt over and upset the comb tips (7) that extend through slot (8) in the closed connector. Fig. 3 illustrates orthographic and sectional views of the preferred connector.

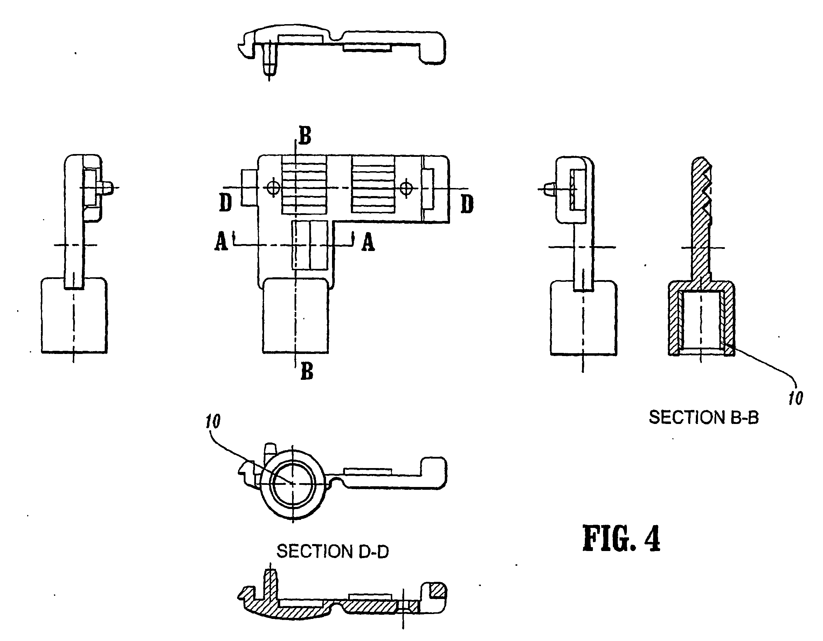

Fig. 4 illustrates orthographic and sectional views of an alternative embodiment of the clip connector. In the alternative embodiment the extending tress is glued or crimped into a tubular hair-retaining feature (10). The snap and stake features are similar to those described in the preferred embodiment. The functional features of the molded plastic connectors, that permanently grip the extending tress and that then are attached and heat staked onto a natural tress, can also be accomplished with various other well known retention and snap closure details, in addition to those details here illustrated.

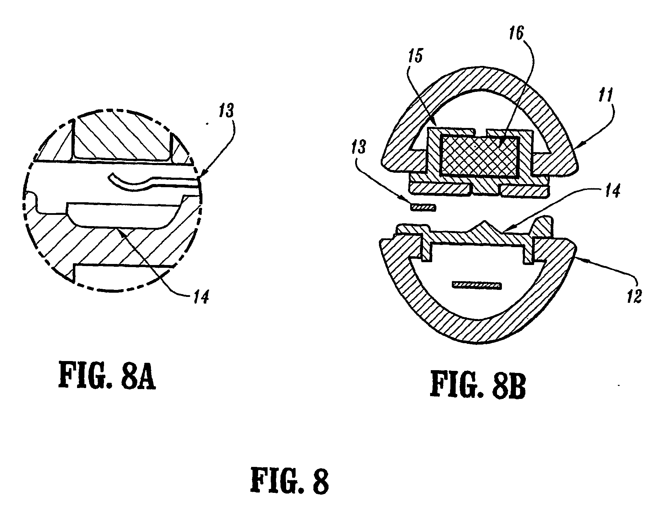

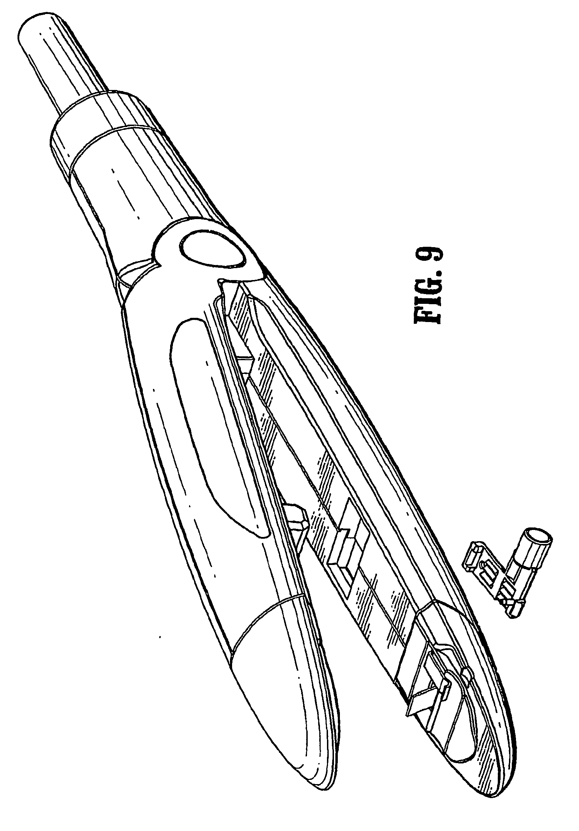

In a similar manner the retention cavity and the staking head of the heat staking tools will be made to retain, melt and upset the particular details of the particular molded connector. For example, Fig. 5 illustrates the preferred embodiment of the connector and connector retaining details in the jaws of the matched heat-staking tool. Fig. 9 illustrates the alternative embodiment of the connector and the matching staking tool. Fig. 8-B shows the pair of jaws (11) & (12) in section and a separate detail, Fig.8-A shows the jaws in plan. With the jaws of the staking tool open, the connector, which has already been snapped closed on the hair tress, is inserted into the clip retention cavity (14) and under the retention spring (13). The jaws of the heat-staking tool are closed and the tool is squeezed. This presses the heated metal staking tool (15) directly onto the tips of the comb teeth (7), softens and upsets the plastic teeth and locks the connector onto the tress.

The heat staking portions are heated, in the preferred embodiment, by a positive temperature coefficient, ceramic heater (16). Such a heater is suitable for heating a small area to a high temperature and has the advantage of being thermally, self-regulating. The heat could alternatively be generated by other well known, miniature heaters, such as a simple resistance wire heater. Alternatively, a temperature controller could be employed to regulate the heater and could also offer additional useful features such as rapid heat up and auto shut-off.

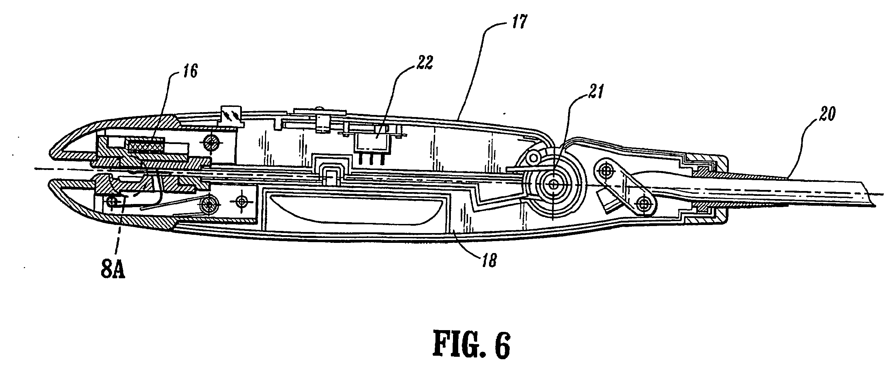

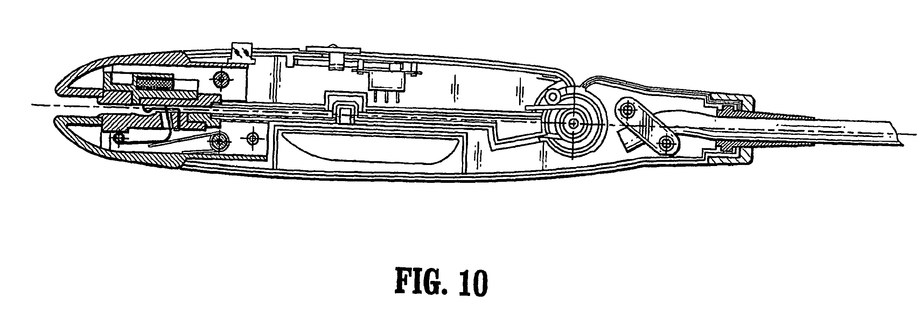

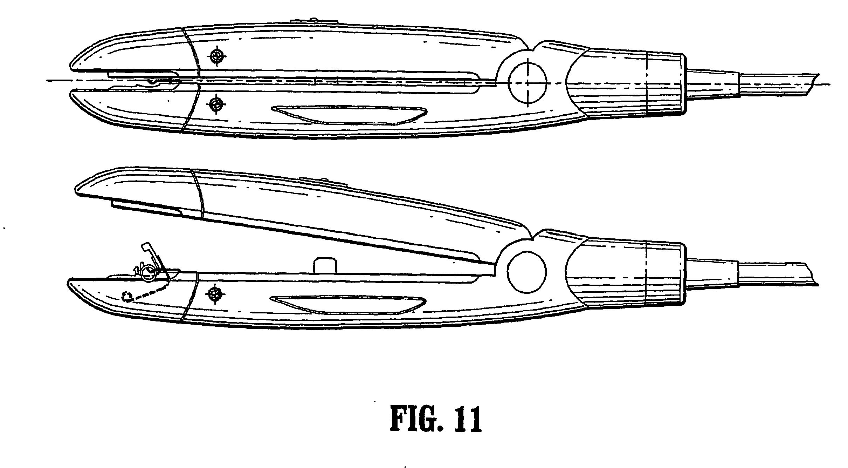

Fig.6 and Fig. 10 show sectional views of the preferred ald alternative Fig.6 and Fig. 10 show sectional views of the preferred and alternative embodiments of the heat-staking tool. The upper jaw (17) and the lower jaw (18) are biased open by a torsion spring (21). The power supply cord (20) is retained by a cord clamp or by an equivalent, labyrinthine retention detail. A switch (22) controls power to the heater (16), which is mounted in the upper jaw (17), in intimate contact with the aluminum staking-tool (15). The staking tool may be bare metal with a polished finish or it could be coated with a ceramic or polyflouride finish. The lower jaw (18) retains the nesting cavity (14) and the spring retaining spring clip (13). The retaining clip (13) is designed so that it opens wide to receive the appropriate connector when the jaws are opened and then closes down to locate and retain the connector when the jaws are brought together, as shown in Fig.7 and Fig. 11.

In alternative embodiments the retaining spring can be opened and closed with a separate actuating button. Also, alternatively, the heat staking tool can be spring loaded in the upper jaw and brought into contact with the melting plastic only after the jaws are closed, by depressing the heated metal tool down onto the connector with a separate and secondary actuator.

While a preferred embodiment of the invention has been herein disclosed and described, it is understood that various modifications can be made without departing from the scope of the invention.

## Claims

1. A device for attaching hair extensions comprising one or more tresses of hair or simulated hair to human hair comprising:
a connector (23) comprising
a body having a first section (5), a second section (6) and a first hinge (4) for enabling said first section (5) to be folded toward said second section (6);
a lock for securing said first section (5) and said second section (6) to each other when said body is folded;
a first tress extending from said body; and
an area between said first section (5) and said second section (6) for receiving a second tress;
and;
a tool (24) comprising
an upper jaw (17);
a lower jaw (18);
a second hinge for connecting said upper jaw (17) to said lower jaw (18); and
a clip (13) on said lower jaw (18) adapted to releasably secure said connector (23) to said lower jaw (18) to enable a user to fold said first section (5) and said second section (6) toward one another.

2. A device according to claim 1, wherein
said first section (5) further comprises at least one locking member extending perpendicular from said first section (5).

3. A device according to claim 2, wherein
said second section (6) further comprises a slot (8) to receive said at least one locking member when said first section is folded toward said second section (6).

4. A device according to claim 3, wherein
said upper jaw (17) further comprises a heater (16) adapted to melt said at least one locking member.

5. A device according to claim 4, wherein
said locking member is adapted to solidify about said body when said upper jaw (17) is removed from contact with said body, thereby allowing said locking member to cool after melting.

6. A device according to claim 1, wherein
said lower jaw (18) further comprises a guide adapted to ensure that said first section (5) and said second section (6) fold toward one another when said upper jaw (17) and said lower jaw (18) are closed.

7. A device according to claim 1, wherein
said lower jaw (18) further comprises a cavity (14) for receiving said body.

8. A device according to claim 1, further comprising
a spring (19) between said upper jaw (17) and said lower jaw (18) adapted to bias said upper jaw (17) and said lower jaw (18) away from one another.

9. A device according to claim 4, wherein
said heater (16) is a positive temperature coefficient, ceramic heater.

10. A device according to claim 4, wherein
said heater (16) is a simple resistance wire heater.

## Patentansprüche

1. Vorrichtung zum Anbringen von Haarverlängerungen, die ein oder mehrere Haarlocken bzw. -zöpfe oder Haarimitat umfassen, an menschlichem Haar, die umfasst:
einen Verbinder (23), der umfasst:
einen Körper mit einem ersten Abschnitt (5), einem zweiten Abschnitt (6) und einem ersten Gelenk (4), um zu ermöglichen, dass der erste Abschnitt (5) in Richtung des zweiten Abschnitts (6) geklappt wird;
eine Fixiervorrichtung zum Befestigen des ersten Abschnitts (5) und des zweiten Abschnitts (6) aneinander, wenn der Körper eingeklappt ist;
eine erste Locke, die sich von dem Körper erstreckt; und
einen Bereich zwischen dem ersten Abschnitt (5) und dem zweiten Abschnitt (6) zum Aufnehmen einer zweiten Locke;
und
ein Werkzeug (24), das umfasst:
eine obere Klaue (17);
eine untere Klaue (18);
ein zweites Gelenk zum Verbinden der oberen Klaue (17) mit der unteren Klaue (18); und
eine Klemme (13) auf der unteren Klaue (18), die geeignet ist, den Verbinder (23) lösbar an der unteren Klaue (18) zu befestigen, um einem Benutzer zu ermöglichen, den ersten Abschnitt (5) und den zweiten Abschnitt (6) aufeinander zu zu klappen.

2. Vorrichtung nach Anspruch 1, wobei
der erste Abschnitt (5) ferner wenigstens ein Fixierelement umfasst, das sich senkrechton dem ersten Abschnitt (5) erstreckt.

3. Vorrichtung nach Anspruch 2, wobei
der zweite Abschnitt (6) ferner einen Schlitz (8) umfasst, um das wenigstens eine Fixierelement aufzunehmen, wenn der erste Abschnitt in Richtung des zweiten Abschnitts (6) geklappt ist.

4. Vorrichtung nach Anspruch 3, wobei
die obere Klaue (17) ferner eine Heizung (16) umfasst, die geeignet ist, das wenigstens eine Fixierelement zu schmelzen.

5. Vorrichtung nach Anspruch 4, wobei
das Fixierelement geeignet ist, sich um den Körper zu verfestigen, wenn die obere Klaue (17) von der Berührung mit dem Körper entfernt wird, wodurch zugelassen wird, dass das Fixierelement nach dem Schmelzen abkühlt.

6. Vorrichtung nach Anspruch 1, wobei
die untere Klaue (18) ferner eine Führung umfasst, die geeignet ist, sicherzustellen, dass der erste Abschnitt (5) und der zweite Abschnitt (6) aufeinander klappen, wenn die obere Klaue (17) und die untere Klaue (18) geschlossen sind.

7. Vorrichtung nach Anspruch 1, wobei
die untere Klaue (18) einen Hohlraum (14) zum Aufnehmen des Körpers umfasst.

8. Vorrichtung nach Anspruch 1, die ferner umfasst
eine Feder (19) zwischen der oberen Klaue (17) und der unteren Klaue (18), die geeignet ist, um die obere Klaue (17) und die untere Klaue (18) voneinander weg vorzuspannen.

9. Vorrichtung nach Anspruch 4, wobei
die Heizung (16) eine keramische Heizung mit positivem Temperaturkoeffizient ist.

10. Vorrichtung nach Anspruch 4, wobei
die Heizung (16) eine einfache Widerstandsdrahtheizung ist.

## Revendications

1. Système de fixation d'extensions capillaires comprenant une ou plusieurs mèches de cheveux ou des cheveux imités à la chevelure humaine comprenant :
un connecteur (23) comprenant
un corps présentant une première section (5), une seconde section (6) et une première charnière (4) pour permettre à ladite première section (5) d'être pliée vers ladite seconde section (6) ;
un verrou pour fixer ladite première section (5) et ladite seconde section (6) l'une à l'autre quand ledit corps est plié ;
une première mèche s'étendant dudit corps ; et
une zone entre ladite première section (5) et ladite seconde section (6) pour recevoir une seconde mèche ;
et ;
un outil (24) comprenant
une mâchoire supérieure (17) ;
une mâchoire inférieure (18) ;
une seconde charnière pour connecter ladite mâchoire supérieure (17) à ladite mâchoire inférieure (18) ; et
une pince (13) sur ladite mâchoire inférieure (18) adaptée pour fixer de manière détachable ledit connecteur (23) à ladite mâchoire inférieure (18) pour permettre à un utilisateur de plier ladite première section (5) et ladite seconde section (6) l'une vers l'autre.

2. Système selon la revendication 1, dans lequel
ladite première section (5) comprend en outre au moins un élément de verrouillage s'étendant perpendiculairement depuis ladite première section (5).

3. Système selon la revendication 2, dans lequel
ladite seconde section (6) comprend en outre une encoche (8) pour recevoir ledit au moins un élément de verrouillage quand ladite première section est pliée vers ladite seconde section (6).

4. Système selon la revendication 3, dans lequel
ladite mâchoire supérieure (17) comprend en outre un élément chauffant (16) adapté pour fondre ledit au moins un élément de verrouillage.

5. Système selon la revendication 4, dans lequel
ledit élément de verrouillage est adapté pour se solidifier autour dudit corps quand ladite mâchoire supérieure (17) est retirée du contact avec ledit corps, permettant ainsi audit élément de verrouillage de refroidir après avoir fondu.

6. Système selon la revendication 1, dans lequel
ladite mâchoire inférieure (18) comprend en outre un guide adapté pour assurer que ladite première section (5) et ladite seconde section (6) se plient l'une vers l'autre quand ladite mâchoire supérieure (17) et ladite mâchoire inférieure (18) sont fermées.

7. Système selon la revendication 1, dans lequel
ladite mâchoire inférieure (18) comprend en outre une cavité (14) pour recevoir ledit corps.

8. Système selon la revendication 1, comprenant en outre
un ressort (19) entre ladite mâchoire supérieure (17) et ladite mâchoire inférieure (18) adapté pour précontraindre ladite mâchoire supérieure (17) et ladite mâchoire inférieure (18) éloignées l'une de l'autre.

9. Système selon la revendication 4, dans lequel
ledit élément chauffant (16) est un élément chauffant céramique à coefficient de température positif.

10. Système selon la revendication 4, dans lequel
ledit élément chauffant (16) est un élément chauffant à fil de résistance unique.
